(19) **Europäisches Patentamt**

**European Patent Office**

**Office européen des brevets**

(11) **EP 1 002 676 A2**

(12) **EUROPÄISCHE PATENTANMELDUNG**

(43) Veröffentlichungstag:
    24.05.2000 Patentblatt 2000/21

(51) Int. Cl.⁷: **B60G 17/015**

(21) Anmeldenummer: **99121536.9**

(22) Anmeldetag: **29.10.1999**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(30) Priorität: **18.11.1998 DE 19853126**

(71) Anmelder: **DaimlerChrysler AG
    70567 Stuttgart (DE)**

(72) Erfinder: **Kutscher, Eberhard
    72135 Dettenhausen (DE)**

(54) **Verfahren zur Niveauregelung und Radfahrzeug mit einem Niveauregelsystem**

(57)    Die Erfindung bezieht sich auf ein Verfahren zur Niveauregelung bei einem Radfahrzeug, bei dem der Abstand zwischen einem Fahrzeugaufbau und einer Radaufhängung für wenigstens ein mit einem gasgefüllten Reifen versehenen Rad auf einen wenigstens in Abhängigkeit von der Fahrzeugbeladung variabel vorgebbaren Abstandssollwert eingeregelt wird, sowie ein Radfahrzeug mit einem Niveauregelsystem und einem Fahrzeugaufbau, der über ein Federelement an einer Radaufhängung abgestüzt ist, an der ein mit einem gasgefüllten Reifen versehenes Rad gelagert ist, wobei durch das Niveauregelsystem der Abstand des Fahrzeugaufbaus von der Radaufhängung auf einen in Abhängigkeit von der Fahrzeugbeladung variabel vorgebbaren Abstandssollwert einregelbar ist.

    Erfindungsgemäß wird der Reifendruck erfaßt und der Abstandssollwert zusätzlich in Abhängigkeit vom erfaßten Reifendruck variabel vorgegeben. Dazu ist bei dem Radfahrzeug dem Reifen ein Reifendrucksensor zugeordnet, und der Abstandssollwert ist zusätzlich in Abhängigkeit vom erfaßten Reifendruck variabel vorgebbar.

Fig. 1

**Beschreibung**

Die Erfindung bezieht sich auf ein Verfahren zur Niveauregelung bei einem Radfahrzeug nach dem Oberbegriff des Anspruchs 1 sowie auf ein Radfahrzeug mit einem Niveauregelsystem nach dem Oberbegriff des Anspruchs 5.

Aus der Offenlegungsschrift DE 195 46 728 A1 ist eine Niveauregeleinrichtung für ein Kraftfahrzeug bekannt, dessen Fahrzeugaufbau über eine pneumatische Abstützung in Form von Luftfederbälgen gegenüber den Fahrzeugachsen abgestützt ist. An den Fahrzeugachsen sind Räder mit gasgefüllten Reifen vorgesehen. Eine Änderung der Höhe des Fahrzeugaufbaus bezüglich der Fahrzeugachsen erfolgt durch eine Änderung der Luftmenge in den Luftfederbälgen. Dabei ist eine kontinuierliche Erfassung der Abstände zwischen dem Fahrzeugaufbau einerseits und den Achsen andererseits durch mehrere Höhensensoren vorgesehen, so daß der Abstand zwischen dem Fahrzeugaufbau und den Achsen auf einen vorgebbaren Sollwert einregelbar ist. Ferner sind Drucksensoren zur Erfassung des Drucks in den Luftfederbälgen vorgesehen, wobei der erfaßte Druckwert, der direkt abhängig ist von der Beladung des Kraftfahrzeuges, zur Ermittlung einer als Maß für eine Deformation der Reifen dienenden Hilfsgröße verwendet wird. Die Niveauregelung kompensiert die beladungsbedingte Deformation der Reifen, indem sie die Hilfsgröße bei der Einregelung des Sollwertes entsprechend berücksichtigt.

Aus der Offenlegungsschrift DE 35 12 047 A1 ist ein Radfahrzeug mit einer Vorderrad- und einer Hinterradaufhängung bekannt, an denen sich ein Fahrzeugaufbau jeweils über eine höhenverstellbare, hydraulische oder pneumatische Stützeinrichtung abstützt. Die beiden Stützeinrichtungen sind über eine gemeinsame Steuerung und eine gemeinsame Druckversorgung variabel druckbeaufschlagbar, so daß der Abstand zwischen dem Fahrzeugaufbau und den Radaufhängungen einstellbar ist. Die höhenverstellbare Stützeinrichtung wird so gesteuert, daß die Änderung der Fahrzeughöhe in Abhängigkeit von der Fahrgeschwindigkeit erfolgt, und zwar derart, daß sie bei niedriger Fahrgeschwindigkeit höher und bei hoher Fahrgeschwindigkeit niedriger eingestellt wird.

Aus der Offenlegungsschrift DE 41 12 738 A1 ist ein System zur Erfassung von feststehenden, typbezogenen Daten eines Kraftfahrzeugreifens durch eine Erfassungseinheit an einem Kraftfahrzeugaufbau bekannt. Dabei tastet die Erfassungseinrichtung seitens des Kraftfahrzeuges einen fest mit dem Reifen verbundenen Datenträger berührungslos ab, wobei der Datenträger beispielsweise Informationen über das Material, die Geometrie und/oder sonstige Eigenschaften des Reifens enthält und vorzugsweise vom Reifenhersteller zur Verfügung gestellt wird.

Aus der Offenlegungsschrift DE 33 15 594 A1 ist eine Vorrichtung zur Überwachung der Position eines Kraftfahrzeugaufbaus relativ zu einer Fahrbahn bekannt, die eine erste Abstandsmeßvorrichtung zur Bestimmung des Abstandes zwischen einer Radaufhängung und der Fahrbahn sowie eine zweite Abstandsmeßvorrichtung zur Bestimmung des Abstandes zwischen dem Fahrzeugaufbau und der Fahrbahn umfaßt. Die Abstandsmeßvorrichtungen sind als Sender-/Empfänger-Einheiten zur Laufzeitmessung von elektromagnetischen Wellen gestaltet und voneinander beabstandet an der Fahrzeugkarosserie angeordnet, so daß sie eine Bestimmung der Winkellage der Karosserie relativ zur Fahrbahn ermöglichen, wobei einzelnen Rädern zugeordnete Abstandsmeßvorrichtungen an den Radaufhängungen eine Bestimmung des Luftdrucks des entsprechenden Radreifens gestatten. Eine Auswerteschaltung bestimmt die Lage der Karosserie und steuert ein Stellglied an, durch das die Winkelstellung der Fahrzeugscheinwerfer justiert wird.

Aus der DE 44 43 810 A1 ist eine Einrichtung zur Niveauregelung eines Kraftfahrzeugaufbaus relativ zu einer Fahrbahn bekannt, die mit einem am Fahrzeugaufbau befestigten Sensor berührungslos, insbesondere über eine Laufzeitmessung eines elektromagnetischen Signals, den Abstand zwischen Fahrzeugaufbau und Fahrbahn mißt. Die Signale des Sensors werden einer elektronischen Auswerteeinheit zugeführt, die mit der Fahrzeugfederung zusammenwirkende und das Fahrzeugniveau regulierende Aktuatoren ansteuert.

Aufgabe der Erfindung ist es, ein Verfahren der eingangs genannten Art zur Niveauregelung bei einem Radfahrzeug sowie ein mit Mitteln zur Durchführung eines solchen Verfahrens ausgerüstetes Radfahrzeug bereitzustellen, bei denen mit möglichst einfachen Mitteln eine genaue Erfassung und Positionierung des Fahrzeugaufbaues gegenüber einer Fahrbahn ermöglicht wird.

Diese Aufgabe wird erfindungsgemäß durch ein Verfahren mit den Merkmalen des Anspruchs 1 sowie ein Radfahrzeug mit den Merkmalen des Anspruchs 5 gelöst.

Das Verfahren nach Anspruch 1 regelt den Abstand zwischen einem Fahrzeugaufbau und einer Radaufhängung, wobei der Abstandssollwert sowohl in Abhängigkeit von der Fahrzeugbeladung, d.h. der Radlast, als auch vom Reifendruck eingestellt wird. Dazu wird, zweckmäßig unter Verwendung von reifenspezifischen Kenndaten, mit Hilfe dieser beiden Größen die Geometrie des Reifens hinsichtlich der Höhe der Radachse über der Fahrbahn, d.h. insbesondere der Reifenhalbmesser zwischen Radachse und Fahrbahn festgestellt und als Korrekturwert in den Abstandssollwert mit eingerechnet.

Das erfindungsgemäße Radfahrzeug nach Anspruch 5 weist einen Reifendrucksensor auf, d.h. einen Gasdrucksensor zur Erfassung des Reifendrucks, dessen Signal gemeinsam mit einem Signal eines Sensors zur Erfassung der Fahrzeugbeladung, insbesondere der Radlast, einer Regeleinheit zugeführt wird, die zur Korrektur des Abstandssollwerts zwischen Fahrzeugaufbau und Radaufhängung die Achshöhe zwischen Radaufhängung und Straße ermittelt.

In Ausgestaltung der Erfindung gemäß den Ansprüchen 2 bzw. 6 wird der Abstandssollwert als Differenz zwischen einem als konstant vorgegebenen Abstand des Fahrzeugaufbaus von einer Fahrbahn und einem Achshöhenkorrekturwert vorgegeben, wobei der Achshöhenkorrekturwert anhand vorgegebener Kennlinien in Abhängigkeit von der Fahrzeugbeladung und dem Reifendruck ermittelt wird. Der Achshöhenkorrekturwert beschreibt die momentane Geometrie des Reifens, indem er den Abstand zwischen der Radachse und der Fahrbahn wiedergibt. Er wird durch das Verfahren zur Niveauregelung nicht beeinflusst, stattdessen wird bei einer Änderung des Achshöhenkorrekturwertes der einzuregelnde Abstand zwischen Fahrzeugaufbau und Radaufhängung geändert, so daß der Abstand des Fahrzeugaufbaus von der Fahrbahn auch bei einer sich ändernden Reifengeometrie und damit sich änderndem Achshöhenkorrekturwert konstant bleibt. Die vorgegebenen Kennlinien beschreiben dabei die Achshöhe, die auch als sogenannter statischer Reifenhalbmesser bezeichnet wird, in Abhängigkeit von der Radlast und dem Reifendruck.

In weiterer Ausgestaltung der Erfindung gemäß den den Ansprüchen 3 bzw. 7 wird der Achshöhenkorrekturwert als Summe mindestens aus einem reifendruckspezifischen Korrekturbeitrag und einem beladungsspezifischen Korrekturbeitrag ermittelt, wobei letzterer aus der gemessenen Belastung eines den Fahrzeugaufbau gegen die Radaufhängung abstützenden Federelements ermittelt wird. Der reifendruckspezifische und der beladungsspezifische Korrekturbeitrag können jeweils getrennt voneinander errechnet und auf einfache Weise zur Gewinnung des Achshöhenkorrekturwerts aufaddiert werden. Dabei kann die Belastung eines als Hydraulik- oder Pneumatikfeder gestalteten Federelements besonders einfach als Druck innerhalb des Federelements bzw. innerhalb des zugeordneten Hydraulik- oder Pneumatiksystems erfaßt werden.

In weiterer Ausgestaltung der Erfindung gemäß den Ansprüchen 4 bzw. 8 wird der Abstandssollwert zusätzlich in Abhängigkeit von einer erfaßten Fahrgeschwindigkeit oder Raddrehzahl variabel vorgegeben. Dadurch wird die sich mit der Fahrgeschwindigkeit des Radfahrzeuges bzw. der Drehgeschwindigkeit des Rades ändernde Reifengeometrie durch eine entsprechende Korrektur des Abstandssollwertes berücksichtigt. Vorzugsweise wird anhand einer vorgegebenen, reifenabhängigen Kennlinie zu einer bestimmten Geschwindigkeit der entsprechende dynamische Reifenhalbmesser ermittelt und als geschwindigkeitsabhängiger Korrekturbeitrag bei der Festlegung des Achshöhenkorrekturwerts berücksichtigt.

In weiterer Ausgestaltung der Erfindung gemäß Anspruch 9 ist ein Radfahrzeug mit einem Fahrzeugaufbau vorgesehen, der sich über mehrere hydraulische oder pneumatische Federelemente an jeweiligen Radaufhängungen abstützt, an denen jeweils ein mit einem Gas gefülltes Reifen versehenes Rad gelagert ist. Das Niveauregelsystem weist ein zentrales hydraulisches oder pneumatisches Druckversorgungssystem für die Federelemente mit einem Druckaufnehmer, einer Kompressoreinheit und einem von einer zentralen Regeleinheit ansteuerbaren Ventilblock auf, wobei die Federelemente über den Ventilblock einzeln mit der Kompressoreinheit und dem Druckaufnehmer koppelbar sind. Bei einer derartigen Anordnung ist lediglich ein zentraler Druckaufnehmer und eine zentrale Kompressoreinheit zur Druckversorgung und -überwachung einer Vielzahl von Federelementen erforderlich. Die Federelemente sind über den Ventilblock nacheinander mit der Kompressoreinheit und dem Druckaufnehmer koppelbar, so daß sich ein besonders einfacher Aufbau des Niveauregelsystems ergibt.

Eine vorteilhafte Ausführungsform der Erfindung ist in den Zeichnungen dargestellt und wird nachfolgend beschrieben. Hierzu zeigen:

Fig. 1     in einer schematischen Darstellung ein pneumatisches Niveauregelsystem für ein Radfahrzeug mit vier auf zwei Achsen angeordneten und mit Gas gefüllten Reifen versehenen Rädern,

Fig. 2     in einer schematischen Seitenansicht ein mit dem Niveauregelsystem gemäß Fig. 1 ausgerüstetes Radfahrzeug im unbeladenen Zustand,

Fig. 3     das Radfahrzeug nach Fig. 2 in einem beladenen Zustand und

Fig. 4     in einem zweidimensionalen Schaubild einen Achshöhenkorrekturwert als Funktion der Belastung eines Federelements bzw. der Radlast für verschiedene Reifendruckwerte.

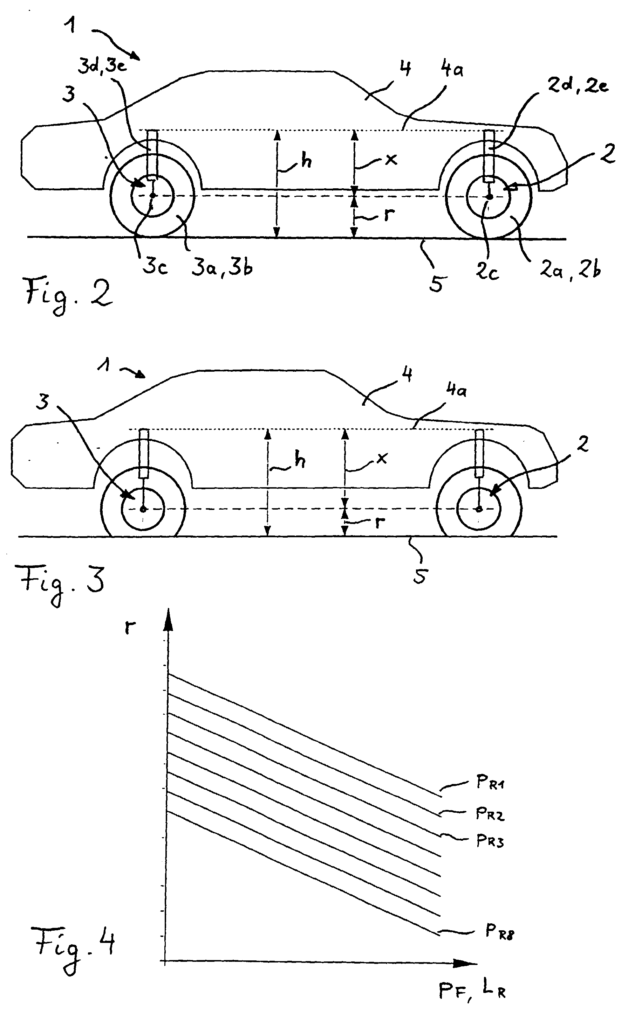

In den Fig. 2 und 3 ist ein Radfahrzeug in Form eines Personenkraftwagens 1 dargestellt, dessen Fahrzeugaufbau 4 über Federelemente 2d, 2e an einer Vorderradaufhängung 2 und über Federelemente 3d, 3e an einer Hinterradaufhängung 3 abgestützt ist. Mit vier Rädern 2a, 2b, 3a, 3b steht der Personenkraftwagen 1 auf einer Fahrbahn 5. Alle vier Räder 2a, 2b, 3a, 3b sind mit luftgefüllten Reifen 2f, 2g, 3f, 3g versehen und um die horizontalen Achsen 2c und 3c drehbar gelagert. Der Abstand zwischen den Achsen 2c bzw. 3c und der Fahrbahn 5 wird im folgenden als für die beiden Achsen im unbelasteten Zustand gleiche Achshöhe r bezeichnet und ist im wesentlichen abhängig von den Eigenschaften und dem jeweiligen Belastungszustand der betreffenden Reifen 2f, 2g, 3f, 3g, insbesondere der Fahrzeugbeladung. Zur Vereinfachung wird angenommen, daß alle vier Reifen 2f, 2g, 3f, 3g des Personenkraftwagens 1 identisch sind und gleich belastet werden. Ohne jede Einschränkung ist auch eine Verwendung von völlig unterschiedlichen Reifen möglich.

Durch die oberen Befestigungspunkte der Federelemente 2d, 2e und 3d, 3e an dem Fahrzeugaufbau 4 ist eine zur Fahrbahn 5 parallele Bezugsfläche 4a gelegt, die unter der Annahme einer für alle vier Räder gleichen Achshöhe r einen Abstand x zu den Radaufhängungen 2 und 3 bzw. den Achsen 2c und 3c aufweist. Da die Bezugsfläche 4a in beliebiger Höhe an dem Fahrzeugaufbau definiert werden kann, ist der Abstand x völlig unabhängig von der Anordnung der Federelemente 2d, 2e und 3d, 3e. Zur Vereinfachung sind jedoch alle Federelemente 2d, 2e, 3d, 3e identisch ausgeführt, und ihre Länge entspricht dem Abstand x.

Wie aus den Fig. 2 und 3 ersichtlich ist, ergibt die Summe von Achshöhe r und Abstand x den Bodenabstand h der Bezugsfläche 4a. Der Bodenabstand h soll unabhängig von der Achshöhe r und dem Abstand x konstant sein, so daß sich der Fahrzeugaufbau 4 gegenüber der Fahrbahn 5 nicht neigt.

Ausgehend vom unbelasteten Zustand gemäß Fig. 2 ändern sich bei dem Personenkraftwagen 1 durch eine Beladung die Belastung der Federelemente 2d, 2e und 3d, 3e bzw. die Radlasten. Ohne eine Niveauregelung ändert sich der Abstand x entsprechend Länge der Federelemente infolge einer Verformung der Federelemente sowie die Achshöhe r infolge einer Verformung der Reifen 2f, 2g und 3f, 3g. Folglich ändert sich auch der Bodenabstand h der Bezugsfläche 4a, was bedeutet, daß der Fahrzeugaufbau 4 zur Fahrbahn 5 hin absinkt. Ohne eine Niveauregelung ist es ferner möglich, daß bei unterschiedlichen Radlasten die Federelemente 2d, 2e, 3d, 3e genau wie die Reifen 2f, 2g und 3f, 3g unterschiedlich deformiert werden, so daß der Fahrzeugaufbau 4 eine geneigte Lage zur Fahrbahn 5 einnimmt.

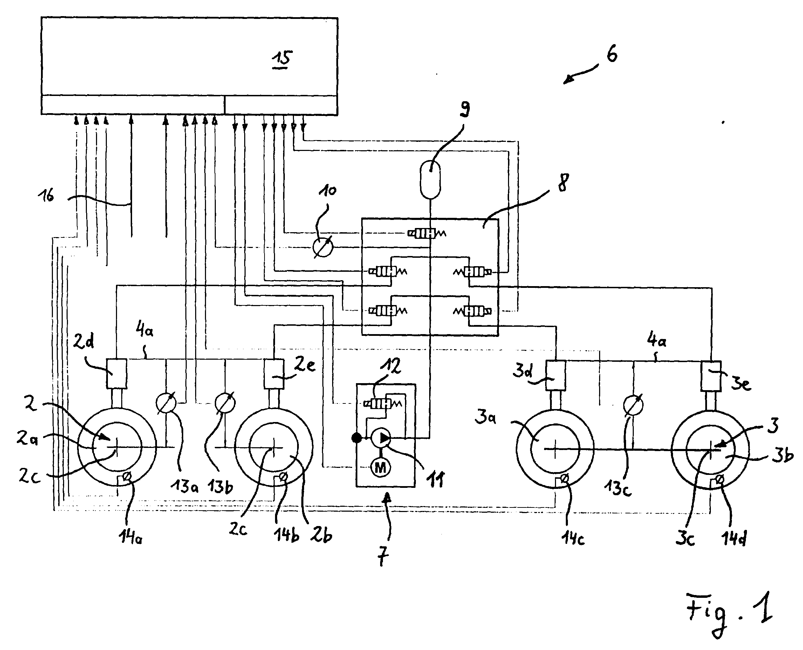

Dem wird mit Hilfe des in Fig. 1 dargestellten Niveauregelsystems 6 entgegengewirkt. Dabei sind die Federelemente 2d, 2e, 3d, 3e als pneumatische Federbeine ausgeführt, die von einer gemeinsamen Kompressoreinheit 7 über einen Ventilblock 8 abwechselnd oder gemeinsam mit Gasdruck beaufschlagt werden können. Zur Stabilisierung des Drucks im System ist ein zentraler Gasdruckspeicher 9 vorgesehen. Ein zentraler Drucksensor 10 dient zur Überwachung des Gasdrucks im Ventilblock 8 unabhängig von der Schaltstellung des Ventilblocks. Die Kompressoreinheit 7 umfaßt einen motorgetriebenen Gaskompressor 11, dem ein Entlüftungsventil 12 parallel geschaltet ist.

Den beiden Vorderrädern 2a bzw. 2b des Personenkraftwagens 1 sind Niveausensoren 13a bzw. 13b zugeordnet, die jeweils den Abstand x der Radachsen 2c zu der Bezugsfläche 4a oder eine entsprechende Länge zwischen dem Fahrzeugaufbau und der Vorderradaufhängung 2 erfassen, die von der Deformation der Federelemente 2d, 2e abhängt. Den beiden Federelementen 3d, 3e zwischen der Hinterradaufhängung 3 und dem Fahrzeugaufbau 4 ist ein Niveausensor 13c zur Messung des Abstandes x zwischen der starr ausgeführten Hinterachse 3c und der Bezugsfläche 4a zugeordnet. In einem modifizierten Ausführungsbeispiel können zwei Niveausensoren vorgesehen sein, die beliebige andere, für die Deformation der Federelemente 3d, 3e repräsentative Längen zwischen der Hinterradaufhängung 3 und dem Fahrzeugaufbau 4 erfassen.

Den Reifen 2f, 2g, 3f, 3g sind Drucksensoren 14a bis 14d zur Erfassung des Gasdrucks in den jeweiligen Reifen zugeordnet. Die Drucksensoren 14a bis 14d sind vorzugsweise in den Felgen der entsprechenden Räder 2a, 2b, 3a, 3b angeordnet und übermitteln vorzugsweise über Funk die erfaßten Reifendruckwerte an eine zentrale Regeleinheit 15, der auch sämtliche anderen Meßwerte des Niveauregelsystems 6 zugeführt werden. Im vorliegenden Ausführungsbeispiel ist insbesondere noch ein nicht dargestellter Geschwindigkeitssensor zur Erfassung der Fahrzeuggeschwindigkeit vorgesehen, dessen Geschwindigkeitssignal 16 ebenfalls der Regeleinheit 15 zugeführt wird.

In einem modifizierten Ausführungsbeispiel sind anstelle der Niveausensoren 13a bis 13c, welche die Deformation der insofern beliebig ausführbaren Federelemente 2d, 2e, 3d, 3e erfassen, Drucksensoren vorgesehen, die den Hydraulik- oder Pneumatikdruck innerhalb der als Hydraulik- oder Pneumatikfedern ausgeführten Federelemente erfassen.

In der Regeleinheit 15 sind Kennlinien abgespeichert, die es ermöglichen, aus der insbesondere über eine Druck- oder Längenmessung ermittelten Deformation der Federelemente 2d, 2e, 3d, 3e die von der Beladung des Personenkraftwagens abhängige Radlast zu ermitteln. Die Kennlinien stellen einen funktionalen Zusammenhang zwischen der Länge des Federelements oder dem Druck in dem Federelement und der äußeren Belastung des Federelements her und beschreiben somit das Verhalten des Federelements. Ferner sind in der Regeleinheit 15 Kennlinien abgespeichert, die den Zusammenhang zwischen der variablen Radlast $L_R$ und dem Reifendruck $p_R$ und damit der Geometrie des Reifens beschreiben. Diese Kennlinien repräsentieren eine mathematische Funktion zweier Variablen, welche die Eigenschaften und das Verhalten des entsprechenden Reifens beschreibt. Im vorliegenden Ausführungsbeispiel stellt die Achshöhe r die relevante Geometriegröße des Reifens dar. Sie entspricht dem Reifenhalbmesser im unbelasteten Zustand abzüglich der belastungsbedingten Deformation des Reifens. In Fig. 4 ist eine Schar von Kennlinien für verschiedene Reifendrücke $p_{R1}$ bis $p_{R8}$ in Form einfacher Geraden dargestellt, die den Zusammenhang zwischen der Achshöhe r und der Radlast $L_R$ lediglich qualitativ wiedergeben. Da ein fester Zusammenhang zwischen der Radlast $L_R$ und der als Druck $p_F$ veranschaulichten Belastung eines entsprechenden Federelements besteht, kann als Variable auf der Abszisse sowohl die Radlast $L_R$ als auch der Druck $p_F$ des Federelements abgetragen sein.

Für einen Reifen der Dimension 225/60 R16 können z.B. an der Ordinate Zahlenwerte im Bereich von etwa 300mm bis 315mm für die Achshöhe r und an der Abszisse Werte von ca. 400kg bis 630kg für die Radlast $L_R$ angegeben sein. Die Radlasten entsprechen Drücken $p_F$ von ca. 5bar bis 11bar in einem üblichen pneumatischen Federelement. Die Zahlenwerte für den Reifendruck $p_R$ der verschiedenen Kennlinien liegen in Abständen von 0,2bar zwischen $p_{R1}$=3bar und $p_{R8}$=1,6bar.

Das erfindungsgemäße Verfahren zur Niveauregelung wird bei dem Personenkraftwagen 1 für jedes Vorderrad getrennt und für die Hinterräder gemeinsam wie folgt durchgeführt.

Zunächst wird der kontinuierlich mit einem Abstandssollwert $x_{soll}$ zu vergleichende Abstand x zwischen der Bezugsfläche 4a und der jeweiligen Radaufhängung ermittelt. Dazu wird entweder über einen der Niveausensoren 13a bis 13c eine Wegmessung durchgeführt, oder es wird in einem anderen Ausführungsbeispiel mit Hilfe von Drucksensoren in den Federelementen 2d, 2e, 3d, 3e eine Druckmessung durchgeführt und der Druck anhand einer federelementspezifischen Kennlinie in eine momentane Länge des Federelementes umgerechnet. Dadurch ist zum einen der Abstand x und zum anderen der Belastungszustand des entsprechenden Federelementes feststellbar. Aus dem Belastungszustand des Federelementes folgt ferner unmittelbar der Wert der Radlast. In einem weiteren Verfahrensschritt wird der Reifendruck gemessen.

Des weiteren wird aus der Radlast $L_R$ und dem Reifendruck $p_R$ die Achshöhe r ermittelt. Dazu ist in der Regeleinheit 15 ein Kennfeld oder eine Näherungsfunktion für die Achshöhe r in Abhängigkeit von der Radlast $L_R$ und dem Reifendruck $p_R$ abgelegt. Als eine besonders einfache Näherung ist die lineare Funktion

$$r(L_R, p_R) = a \cdot L_R + b \cdot p_R + c$$

verwendbar, wobei a und b beispielsweise durch Messungen ermittelte Steigungsfaktoren für die Radlast bzw. den Reifendruck und c einen konstanten Offsetwert darstellen. Bei einer Verwendung von Hydraulikoder Pneumatikfedern als Federelemente läßt sich die Achshöhe r auch direkt in Abhängigkeit vom Druck $p_F$ in dem betreffenden Federelement angeben:

$$r(p_F, p_R) = d \cdot p_F + b \cdot p_R + e.$$

Dabei stellen d einen druckspezifischen Steigungsfaktor und e einen konstanten Offset dar.

In einem weiteren Verfahrensschritt wird die Achshöhe r als sogenannter Achshöhenkorrekturwert von einem vorgegebenen Bodenabstand h, der konstant gehalten werden soll, abgezogen, woraus sich gemäß der nachfolgenden Formel der Sollwert $x_{soll}$ für den Abstand x ergibt:

$$x_{soll} = h-r.$$

Damit wird der Abstandssollwert $x_{soll}$ um einen beladungsspezifischen und einen reifendruckspezifischen Korrekturbeitrag geändert, so daß die Regelung des Abstandes x die durch den Achshöhenkorrekturwert repräsentierte Reifengeometrie berücksichtigt. Das Verfahren regelt demzufolge den Abstand x nicht auf einen feststehenden, sondern auf einen variabel vorgegebenen Sollwert $x_{soll}$ ein, wobei der Sollwert in Abhängigkeit von der Fahrzeugbeladung und dem Reifendruck reifenspezifisch korrigiert wird.

In einem modifizierten Ausführungsbeispiel wird der Abstandssollwert $x_{soll}$ um einen Geschwindigkeitskorrekturwert korrigiert. Dazu wird in einem gesonderten Verfahrensschritt entweder die Fahrzeuggeschwindigkeit oder die Drehgeschwindigkeit des Rades gemessen und anhand einer reifenspezifischen Kennlinie die dynamische Deformation des Reifens bestimmt. Insbesondere wird eine drehgeschwindigkeitsspezifische Änderung des Reifenhalbmessers ermittelt, wobei als weitere Einflußparameter der Reifendruck und die Radlast berücksichtigt werden können. Die Verwendung eines derartigen Geschwindigkeitskorrekturwertes hat bei einer zunehmenden Fahrzeuggeschwindigkeit im allgemeinen einen abnehmenden Abstandssollwert $x_{soll}$ zur Folge, da der sogenannte dynamische Reifenhalbmesser mit zunehmender Drehgeschwindigkeit des Reifens zunimmt.

Mit Hilfe des erfindungsgemäßen Verfahrens kann somit der Bodenabstand h des Fahrzeugaufbaus 4 unabhängig von der Beladung, dem Reifendruck und gegebenenfalls der Fahrgeschwindigkeit konstant gehalten werden.

## Patentansprüche

1. Verfahren zur Niveauregelung bei einem Radfahrzeug (1), bei dem

   - der Abstand (x) zwischen einem Fahrzeugaufbau (4) und einer Radaufhängung (2, 3) für wenigstens ein mit einem gasgefüllten Reifen versehenes Rad (2a, 2b; 3a, 3b) auf einen wenigstens in Abhängigkeit von der Fahrzeugbeladung variabel vorgebbaren Abstandssollwert ($x_{soll}$) eingeregelt wird,
     **dadurch gekennzeichnet, daß**
   - der Reifendruck des Rades erfaßt und der Abstandssollwert ($x_{soll}$) zusätzlich in Abhängigkeit vom erfaßten Reifendruck variabel vorgegeben wird.

2. Verfahren nach Anspruch 1,
**dadurch gekennzeichnet, daß**
der Abstandssollwert ($x_{soll}$) als Differenz zwischen einem als konstant vorgegebenen Abstand (h) des Fahrzeugaufbaus (4) von einer Fahrbahn (5) und einem Achshöhenkorrekturwert (r) vorgegeben wird, wobei der Achshöhenkorrekturwert (r) anhand vorgegebener Kennlinien in Abhängigkeit von der Fahrzeugbeladung und dem Reifendruck ermittelt wird.

3. Verfahren nach Anspruch 2,
**dadurch gekennzeichnet, daß**
der Achshöhenkorrekturwert (r) als Summe mindestens aus einem reifendruckspezifischen Korrekturbeitrag und einem beladungsspezifischen Korrekturbeitrag ermittelt wird, wobei letzterer aus der gemessenen Belastung eines den Fahrzeugaufbau (4) gegen die Radaufhängung (2, 3) abstützenden Federelements (2d, 2e; 3d, 3e) ermittelt wird.

4. Verfahren nach einem der Ansprüche 1 bis 3,
**dadurch gekennzeichnet, daß**
der Abstandssollert ($x_{soll}$) zusätzlich in Abhängigkeit von einer erfaßten Fahrgeschwindigkeit oder Raddrehzahl variabel vorgegeben wird.

5. Radfahrzeug mit

- einem Fahrzeugaufbau (4), der über ein Federelement (2d, 2e; 3d, 3e) an einer Radaufhängung (2, 3) abgestützt ist, an der ein mit einem gasgefüllten Reifen (2f, 2g; 3f, 3g) versehenes Rad (2a, 2b; 3a, 3b) gelagert ist, und
- einem Niveauregelsystem (6), durch das der Abstand (x) des Fahrzeugaufbaus (4) von der Radaufhängung (2, 3) auf einen in Abhängigkeit von der Fahrzeugbeladung variabel vorgebbaren Abstandssollwert ($x_{soll}$) einregelbar ist,
**dadurch gekennzeichnet, daß**
- dem Reifen (2f, 2g; 3f, 3g) ein Reifendrucksensor (14a bis 14d) zugeordnet ist und der Abstandssollwert ($x_{soll}$) zusätzlich in Abhängigkeit vom erfaßten Reifendruck variabel vorgebbar ist.

6. Radfahrzeug nach Anspruch 5,
**dadurch gekennzeichnet, daß**
das Niveauregelsystem (6) den Abstandssollwert ($x_{soll}$) als Differenz zwischen einem als konstant vorgebbaren Abstand (h) des Fahrzeugaufbaus (4) von einer Fahrbahn (5) und einem anhand vorgebbarer Kennlinien in Abhängigkeit von der Fahrzeugbeladung und dem Reifendruck ermittelbaren Achshöhenkorrekturwert (r) ermittelt.

7. Radfahrzeug nach Anspruch 6,
**dadurch gekennzeichnet, daß**
das Niveauregelsystem (6) den Achshöhenkorrekturwert (r) als Summe mindestens aus einem reifendruckspezifischen Korrekturbeitrag und einem beladungsspezifischen Korrekturbeitrag ermittelt, wobei letzterer aus der Belastung des Federelementes (2d, 2e; 3d, 3e) abgeleitet wird.

8. Radfahrzeug nach einem der Ansprüche 5 bis 7,
**dadurch gekennzeichnet, daß**
dem Radfahrzeug (1) ein Geschwindigkeitssensor zugeordnet ist und der Abstandssollwert ($x_{soll}$) zusätzlich in Abhängigkeit von der erfaßten Geschwindigkeit vorgebbar ist.

9. Radfahrzeug nach einem der Ansprüche 5 bis 8 mit

- einem Fahrzeugaufbau (4), der sich über mehrere hydraulische oder pneumatische Federelemente (2d, 2e; 3d, 3e) an jeweiligen Radaufhängungen (2, 3) abstützt, an denen jeweils ein mit einem gasgefüllten Reifen (2f, 2g; 3f, 3g) versehenes Rad (2a, 2b; 3a, 3b) gelagert ist, weiter
**dadurch gekennzeichnet, daß**
- das Niveauregelsystem (6) ein zentrales, hydraulisches oder pneumatisches Druckversorgungssystem für die Federelemente (2d, 2e; 3d, 3e) mit einem Druckaufnehmer (10), einer Kompressoreinheit (7) und einem von einer zentralen Regeleinheit (15) ansteuerbaren Ventilblock (8) aufweist, wobei die Federelemente (2d, 2e; 3d, 3e) über den Ventilblock (8) einzeln mit der Kompressoreinheit (7) und dem Druckaufnehmer (10) koppelbar sind.

Fig. 1

EP 1 002 676 A2

Fig. 2

Fig. 3

Fig. 4